# EUROPEAN PATENT APPLICATION

(11) **EP 4 815 104 A1**
(43) Date of publication of application: **30.09.2026**
(21) Application number: 24875635.5
(22) Date of filing: 05.03.2024
(51) Int. Cl.: H01M 10/613, H01M 10/6554, H01M 10/658, H01M 10/04

(54) **SECONDARY BATTERY**

(30) Priority: 23.11.2023 KR 20230163982
(71) Applicant: Samsung SDI Co., Ltd., Gyeonggi-do 17084 (KR)
(72) Inventor: CHOI, Yun Seok, Yongin-si, Gyeonggi-do, 17084 (KR)
(74) Representative: Gulde & Partner
(86) International application number: PCT/KR2024/002825
(87) International publication number: WO 2025/110357

(57) **Abstract**

Provided is a secondary battery, which improves cooling performance because a cooling member electrically connected to a cooling terminal cools an electrode assembly inside a case. A secondary battery includes an electrode assembly including a first electrode plate, a separator, and a second electrode plate, a case configured to accommodate the electrode assembly, a cap plate configured to seal the case, a first terminal electrically connected to a first electrode plate of the electrode assembly and exposed to the outside the cap plate, a cooling member accommodated inside the case and in contact with the electrode assembly, and a cooling terminal electrically connected to the cooling member and exposed to the outside of the cap plate.

## Description

### TECHNICAL FIELD

Embodiments relate to a secondary battery.

### BACKGROUND ART

A secondary battery is a chargeable and dischargeable battery, unlike a primary battery that is not chargeable. Low-capacity secondary batteries, in which a single battery cell is packaged in a pack, are used in small and portable electronic devices such as mobile phones and camcorders. In addition, large-capacity secondary battery modules provided in battery pack units, in which dozens of battery packs are connected, are being widely used as power sources for driving motors in hybrid vehicles, electric vehicles, etc.

A secondary battery may be manufactured by embedding a stacked or wound electrode assembly and an electrolyte in a case with a separator between positive and negative electrode plates and then installing a cap plate on the case. The electrode assembly may have a non-coating portion tab protruding toward a side or upper portion, and a current collection structure may be connected to the non-coating portion tab.

In such a secondary battery, a plurality of secondary batteries are connected to each other in series in the form of a battery module or battery pack and then be mounted on a vehicle or an energy storage device. As the battery module or battery pack increases in energy density, heat generation increases, and thus, various methods for reducing the heat generation or improving heat dissipation for user safety are required.

The above-described information disclosed in the technology that serves as the background of the present disclosure is only for improving understanding of the background of the present disclosure and thus may include information that does not constitute the related art.

### DETAILED DESCRIPTION OF THE INVENTION

### TECHNICAL PROBLEM

Aspects of some embodiments of the present disclosure provide a secondary battery capable of improving cooling performance.

### SOLUTION TO TECHNICAL PROBLEM

According to some embodiments, a secondary battery includes: an electrode assembly including a first electrode plate, a separator, and a second electrode plate; a case configured to accommodate the electrode assembly; a cap plate configured to seal the case; a first terminal electrically connected to a first electrode plate of the electrode assembly and exposed to the outside the cap plate; a cooling member accommodated inside the case and in contact with the electrode assembly; and a cooling terminal electrically connected to the cooling member and exposed to the outside of the cap plate.

The cooling member may have a flat plate shape.

The cooling member may include an inner cooling member interposed between the first electrode plate and the separator or between the second electrode plate and the separator inside the electrode assembly.

The cooling member may further include an outer cooling member that is in contact with an outer surface of the electrode assembly.

The outer cooling member may include two outer cooling members, which are in contact with both long sides of the electrode assembly to cover both the long sides of the electrode assembly, respectively.

The inner cooling member may be interposed between the electrode assemblies at regular intervals.

The cooling member may be electrically connected to the cooling terminal through a conducting wire.

Each of the cooling member and the conducting wire may be coated with an insulating material.

The insulating material may be configured to cover all the cooling member and the conducting wire.

The insulating material may include silica aerogel or polyimide foam.

The cooling member may be made of a thermoelectric element or thermoelectric material.

The cooling member may have a size less than that of the first electrode plate or the second electrode plate.

The electrode assembly may include a stack type electrode assembly in which the first electrode plate, the separator, the second electrode plate, and the separator are sequentially stacked.

The secondary battery may further include a sealing member interposed between the cooling terminal and the cap plate.

### ADVANTAGEOUS EFFECTS OF INVENTION

The secondary battery of the present invention may improve the cooling performance because the cooling member electrically connected to the cooling terminal cools the electrode assembly inside the case.

### BRIEF DESCRIPTION OF DRAWINGS

FIG. 1 illustrates a perspective view of a secondary battery according to embodiments;
FIG. 2 illustrates a cross-sectional view taken along line 2-2-' of FIG. 1;
FIG. 3 illustrates a perspective view of an electrode coupled to a cooling member in the secondary battery of FIG. 1;
FIG. 4 illustrates an exploded perspective view of a state in which the cooling member and the electrode assembly of FIG. 3 are disassembled; and
FIG. 5 illustrates a transmissive perspective view of connection between the cooling member and the cooling terminal in the secondary battery of FIG. 1.

### MODE FOR CARRYING OUT THE INVENTION

Hereinafter, embodiments will be described in detail with reference to the accompanying drawings.

Embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, processes, operations, members, elements, and/or groups of these, nor exclude the presence or addition of one or more other different shapes, numbers, processes, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present disclosure is not limited thereto. For example, an element or feature shown in the drawings is turned inside out, the element or feature described as "beneath" or "below" may change into "above" or "upper". Thus, the term "below" may encompass the term "above" or "below".

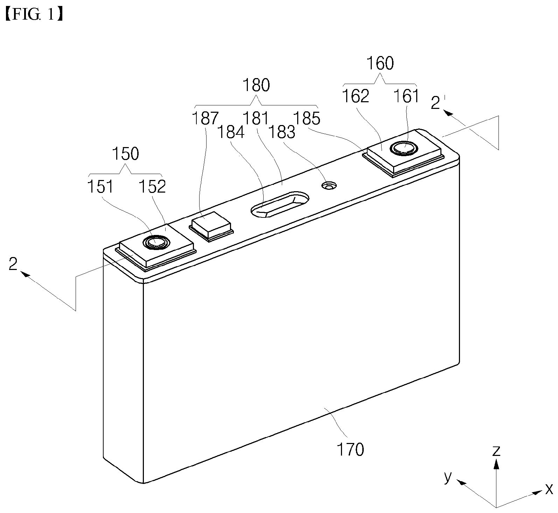

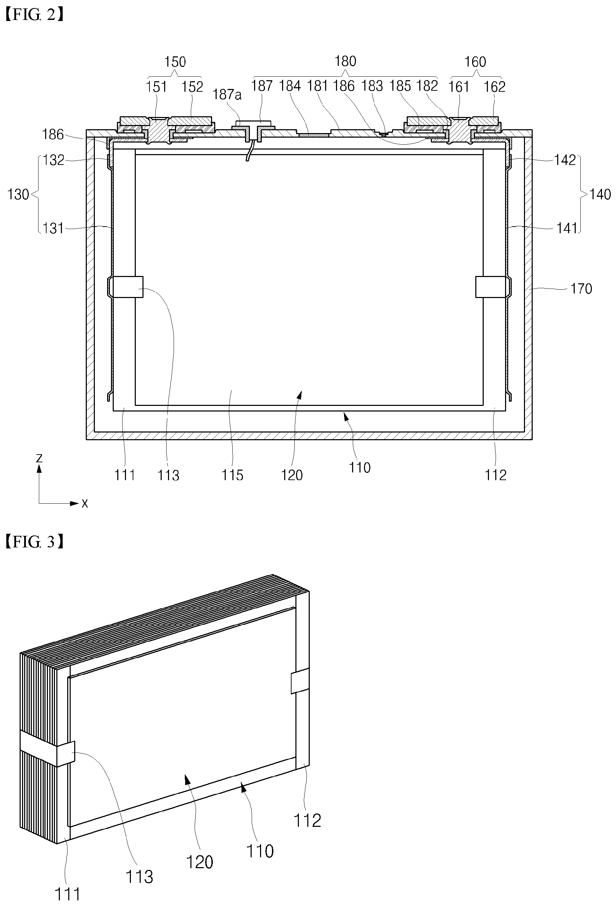

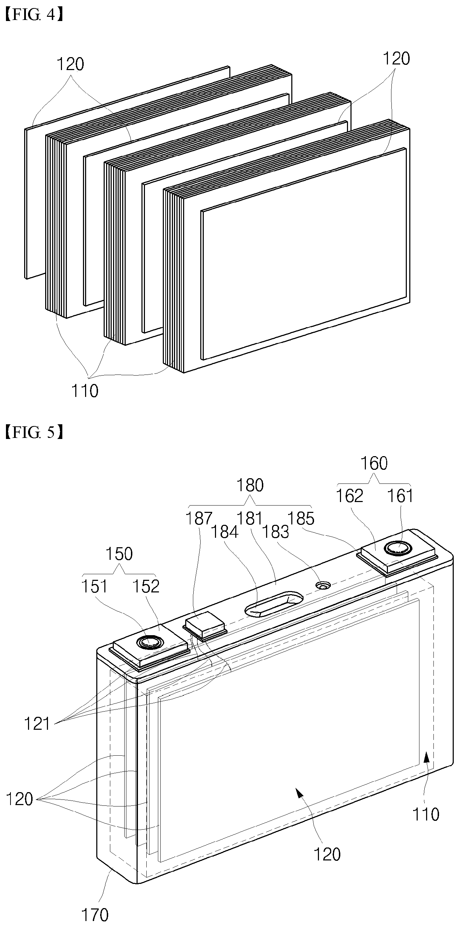

FIG. 1 illustrates a perspective view of a secondary battery according to embodiments, and FIG. 2 illustrates a cross-sectional view taken along line 2-2-' of FIG. 1. FIG. 3 illustrates a perspective view of an electrode coupled to a cooling member in the secondary battery of FIG. 1, FIG. 4 illustrates an exploded perspective view of a state in which the cooling member and the electrode assembly of FIG. 3 are disassembled, and FIG. 5 illustrates a transmissive perspective view of connection between the cooling member and the cooling terminal in the secondary battery of FIG. 1. Hereinafter, a secondary battery according to embodiments will be described with reference to FIGS. 1 to 5.

As illustrated in FIGS. 1 to 5, a secondary battery 100 may include an electrode assembly 110, a cooling member 120, a first current collector 130, a second current collector plate 140, a first terminal 150, a second terminal 160, a case 170, and a cap assembly 180. In some embodiments, the first terminal 150 may include a first terminal pillar 151 and a first terminal plate 152, and the second terminal 160 may include a second terminal pillar 161 and a second terminal plate 162.

The electrode assembly 110 may be provided by stacking a plurality of stacks of a first electrode plate, a separator, and a second electrode plate, each of which is provided in a thin plate or film shape. In some embodiments, the first electrode plate may operate with a first polarity, for example, operate as a positive electrode, and the second electrode plate may operate with a second polarity, for example, operate as a negative electrode. In some embodiment, the first electrode plate and the second electrode plate may be disposed with different polarities depending on selection of a person skilled in the art.

The first electrode plate is formed by applying a first electrode active material such as a transition metal oxide on a first electrode collector formed of metal foil such as aluminum foil, and includes a first electrode non-coating portion 111 on which the first electrode active metal is not applied. The first electrode non-coating portion 111 may provide a path for a current flow between the first electrode plate and the outside.

In some embodiments, the first electrode non-coating portion 111 may be disposed to overlap at the same position if the first electrode plate is stacked, thereby providing a multi-tap structure. The first electrode non-coating portion 111 may be provided to protrude to one side of the electrode assembly 110. In some embodiments, a plurality of first electrode non-coating portions 111 may be welded to each other to provide one first current collector tab. The first electrode non-coating portion 111 may be aligned to one side of the electrode assembly 110 to protrude.

The second electrode plate is formed by applying a second electrode active material such as graphite or carbon on a first electrode collector formed of metal foil such as nickel or copper foil, and includes a second electrode non-coating portion 112 on which the second electrode active metal is not applied.

In some embodiments, the second electrode non-coating portion 112 may also be disposed to overlap at the same position if the second electrode plate is stacked, thereby providing a multi-tap structure. The second electrode non-coating portion 112 may be provided to protrude to the other side of the electrode assembly 110. In some embodiments, a plurality of first electrode non-coating portions 111 may be welded to each other to provide one second current collector tab.

The separator disposed between the first electrode plate and the second electrode plate to prevent short circuit and enable movement of lithium ions. The separator may be made of polyethylene, polypropylene, or a composite film of polyethylene and polypropylene. The material of the separator does not limit the scope of the present disclosure.

In some embodiments, the electrode assembly 110 may be maintained in a stacked state through a separate insulating tape 113 attached to a partial area of an outer surface thereof after stacking a plurality of electrode plates (the first electrode plate and the second electrode plate) together with the cooling member 120. In some embodiments, the insulating tape 113 may maintain the shape of the cooling member 120 stacked together with the electrode assembly 110. Thereafter, the insulating tape 113 may allow the non-coating portions 111 and 112 of the electrode assembly 110 to be welded to the current collectors 130 and 140, respectively, at accurate positions and may be fixed so that a structure of the electrode assembly 110 coupled to the cooling member 120 is maintained within the final secondary battery structure.

In some embodiments, the electrode assembly 110 and the cooling member 120 may be accommodated in the case 170 together with an electrolyte. The electrolyte may include an organic solvent such as ethylene carbonate (EC), propylene carbonate (PC), diethyl carbonate (DEC), ethyl methyl carbonate (EMC), or dimethyl carbonate (DMC), and a lithium salt such as LiPF₆ or LiBF₄. The electrolyte may be liquid, solid, or gel.

The cooling member 120 may have a substantially flat plate shape and include an inner cooling member 120a, which is interposed between the plurality of electrode plates of the electrode assembly 110 and the separator, and two outer cooling members 120b, each of which is in contact with a long side of the electrode assembly 110. Each of the two outer cooling members 120b may be interposed between the electrode assembly 110 and the case 170. In some embodiments, the inner cooling member 120a may be disposed inside the electrode assembly 110. The inner cooling member 120a may be interposed between the electrode plate and the separator in the electrode assembly 110. For example, as illustrated in FIGS. 4 and 5, the cooling member 120 may include two outer cooling members 120b and two inner cooling members 120a, but in the present disclosure, the number of cooling members 120 may not be limited thereto. The inner cooling member 120a may be disposed between the electrode assemblies 110 at regular intervals. In some embodiments, the number of electrode assemblies 110 interposed between the two cooling members 120 may be the same, and their thicknesses may be the same. For example, the cooling member 120 may be additionally inserted one by one for every 10 to 30 electrode plates stacked in the electrode assembly 110. In some embodiments, if twenty electrode plates are interposed between the two cooling members 120, the cooling member 120 may include ten first electrode plates and ten second electrode plates, which are sequentially stacked. In some embodiments, the separator may be further interposed between the first and second electrode plates. As the number of electrode plates interposed between the two cooling members 120 decreases, cooling performance may be improved. However, if the number of cooling members 120 increases, capacity of the electrode assembly 110 for the same volume may decrease.

In some embodiments, the cooling member 120 may include at least one of the inner cooling member 120a or the outer cooling member 120b. The cooling member 120 may include only the inner cooling member 120a disposed inside the electrode assembly 110 or may include only the outer cooling member 120b disposed outside the electrode assembly 110. In some embodiments, if the cooling member 120 includes both the inner cooling member 120a and the outer cooling member 120b, the cooling performance may be improved.

The cooling member 120 may be electrically connected to the cooling terminal 187 exposed to the outside of the cap plate 181 through a conducting wire 121. In some embodiments, the conducting wire 21 may be accommodated in the case 120. The conducting wire 121 may electrically connect each cooling member 120 to each cooling terminal 187. The number of conducting wires 121 may be the same as the number of cooling members 120. Each of the plurality of cooling members 120 may be electrically connected to the cooling terminal 187 through the conducting wire 121.

The cooling member 120 may be made of a material having high thermal conductivity that does not react with the electrolyte or the electrode plates of the electrode assembly 110. For example, the cooling member 120 may include a thermoelectric element or thermoelectric material. This cooling member 120 may be electrically connected to the cooling terminal 187 exposed on an upper side of the cap plate 181. If current is applied through the cooling terminal 187, the cooling member 120 may cool the electrode assembly 110 through cooling.

In some embodiments, the cooling member 120 may be coated with an insulating material. In some embodiments, the conducting wire 121 that electrically connects the cooling member 120 to the cooling terminal 187 may also be coated with an insulating material. The insulating material may be a material that has electrical and thermal insulation properties. For example, the insulating material may be silica aerogel or polyimide foam. In some embodiments, the insulating material may prevent the cooling member 120 and the conducting wire 121, which are disposed inside the case 180, from being in contact with and reacting with the first electrode plate, the second electrode plate, and the electrolyte of the electrode assembly 110. The insulating material may also cover an area on which the conducting wire 121 and the cooling member 120 are in contacted with and coupled to each other. In some embodiments, the cooling member 120, the conducting wire 121, and the insulating material may be integrated with each other. The conducting wire 121 may not be coated with an insulating material at only a portion of the area that is in contact with the cooling terminal 187. However, after the conducting wire 121 is coupled to the cooling terminal 187 by welding, the conducting wire 121 may be covered with the insulating tape and/or the insulating material.

The cooling member 120 may have a size less than that of the first or second electrode plate. A length of the cooling member 120 in a first direction x, which is a longitudinal direction of the cap plate 181, may be less than that of each of the first and second electrode plates. In some embodiments, the length of the cooling member 120 in a second direction y, which is a width direction of the cap plate 181, may be less than that of each of the first and second electrode plates. For example, the cooling member 120 may not overlap the first electrode non-coating portion 111 and the second electrode non-coating portion 112 of the electrode assembly 110. That is, the cooling member 120 may not be interposed between the stacked first electrode non-coating portions 111 and between the stacked second electrode non-coating portions 112.

In some embodiments, the size may be a size of a surface provided by the first direction x, which is a surface corresponding to the long side of the electrode assembly 110, and a third direction z, which is a height direction of the case 170. As described above, the cooling member 120 may improve safety by individually cooling the secondary batteries 100 through the cooling member 120 even if the plurality of secondary batteries 100 are electrically connected to each other in the form of a module or pack.

The first current collector plate 130 may be made of a conductive material such as aluminum and may be electrically coupled to the first electrode non-coating portion 111 protruding from one end of the electrode assembly 110 so as to be electrically connected to the first electrode plate. The first current collector plate 130 may be electrically connected to the first electrode non-coating portion 111 by welding. The first current collector plate 130 may be interposed between a first electrode connection part 131, which extends vertically along one side of the electrode assembly 110, and a first terminal connection part 132, which is interposed between the electrode assembly 110 and the cap assembly 180, and is coupled to a first terminal 150.

The first electrode connection part 131 extends vertically along one side of the electrode assembly 110 and may have a substantially plate shape. The first electrode connection part 131 may be coupled through the welding in a state of being in contact with the first electrode non-coating portion 111 of the electrode assembly 110 and may have the same first polarity as the first electrode non-coating portion 111. Hereinafter, for convenience of explanation, a surface of the first electrode connection part 131 facing one surface of the electrode assembly 110 will be referred to as an inner surface, and a surface facing one surface of the case 170 will be referred to as an outer surface.

The first terminal connection part 132 may include an upper portion having a shape of an approximately '┌' shape and interposed in an approximately plate shape between the cap assembly 180 and the electrode assembly 110 and a side portion bent downward from an outer end of the upper portion to extend and coupled to the first electrode connection part 131. The first terminal connection part 132 may be coupled to the first electrode connection part 131 by laser welding to form one first current collector plate 130.

The second current collector plate 140 may be made of a conductive material such as nickel and be in contact with the second electrode non-coating portion 112, which protrudes to the other end of the electrode assembly 110 so as to be electrically connected to the second electrode plate. The second current collector plate 140 may include a second electrode connection part 141 and a second terminal connection part 142. Because a shape of the second current collector plate 140 is the same as that of the first current collector plate 130, duplicated description will be omitted.

The first terminal 150 may be made of a conductive material such as aluminum and be electrically connected to the first current collector plate 130. The first terminal 150 may include a first terminal pillar 151 and a first terminal plate 152.

The first terminal pillar 151 may protrude and extend upward by a certain length through the cap plate 181 of the cap assembly 180 and may be electrically connected to the first current collector 130 at the lower portion of the cap plate 181. In some embodiments, the first terminal pillar 151 may protrude and extend to the upper portion of the cap plate 181 by a certain length. A lower portion of the first terminal pillar 151 may be inserted into a hole of the first current collector plate 131 and then riveted and/or welded.

The first terminal plate 152 has a hole, and the upper portion of the first terminal pillar 151 may be coupled to the hole and riveted and/or welded. The first terminal plate 152 may be disposed on the upper portion of the cap plate 181. In some embodiments, interfaces between the upwardly exposed first terminal pillar 151 and the first terminal plate 152 may be welded to each other. For example, laser beam may be provided to a boundary area between the upwardly exposed first terminal pillar 151 and the first terminal plate 152, and thus, the boundary area may be melted together and then cooled to be weld. In some embodiments, the first terminal pillar 151 and the first terminal plate 152 may be electrically insulated from the cap plate 181.

The second terminal 160 may be made of a conductive material such as nickel, and be electrically connected to the second current collector plate 140. The second terminal 160 may include a second terminal pillar 161 and a second terminal plate 162. Because a shape of the second current collector plate 160 is the same as that of the first current collector plate 150, duplicated description will be omitted.

The case 170 is formed of a conductive metal such as aluminum, aluminum alloy, or steel plated with nickel, and has an approximately hexahedral shape provided with an opening through which the electrode assembly 110, the cooling member 120, the first collecting plate 130, and the second collecting plate 140 are inserted and seated. A cap plate 181 may be coupled to the opening of the case 170 to seal the case 170. An inner surface of the case 170 may be basically insulated to prevent electrical short circuits from occurring therein.

The cap assembly 180 may be coupled to the opening of the case 170. The cap assembly 180 may include a cap plate 181, a seal gasket 182, a stopper 183, a safety vent 184, an upper coupling member 185, a lower insulating member 186, and a cooling terminal 187. The cap plate 181 may seal the opening 171 of the case 170. The seal gasket 182 may be made of an insulating material, be disposed between the cap plate 181 and the first terminal pillar 151 of the first terminal 150 and between the cap plate 181 and the second terminal pillar 151 of the second terminal 160, and seal a gap between each of the first and second terminal pillars 151 and 161 and the cap plate 181. The seal gasket 182 prevents the ingress of moisture into the secondary battery 100 or the leakage of the electrolyte from the secondary battery 100.

The stopper 183 may seal an electrolyte injection port of the cap plate 181, and the safety vane 184 may be installed in the vent hole of the cap plate 181 and provided with a notch that is openable at a set pressure.

The upper coupling member 185 may be provided between each of the first terminal plate 152 and the second terminal plate 162 and the cap plate 181 at the upper portion of the cap plate 181. In some embodiments, the upper coupling member 185 may be in close contact with the cap plate 181. In some embodiments, the upper coupling member 185 may closely adhere to the seal gasket 182. The upper coupling member 185 may insulate the first terminal plate 152 and the cap plate 181 from each other and the second terminal plate 162 and the cap plate 181 from each other. In some embodiments, the upper coupling member 185 disposed on the first terminal pillar 151 may electrically connect the first terminal plate 152 to the cap plate 181, and thus, the cap plate 181 may have the same polarity as the first terminal 150. In some embodiments, the case 170 may also have the same polarity as the cap plate 181, and electrical short-circuit with the electrode assembly 110 may be prevented by internal insulation.

The cooling terminal 187 may be made of a conductive material and be electrically connected to the plurality of cooling members 120 through conducting wires 121, respectively. A portion of the cooling terminal 187 may be exposed to an upper side of the cap plate 181. The cooling terminal 187 may pass through the cap plate 181, and a portion of the cooling terminal 187 may be disposed inside the case 170. A bottom surface of the cooling terminal 187 may be in contact with and electrically connected to the conducting wire 121. In some embodiments, a sealing member 187a may be further interposed between the cooling terminal 187 and the cap plate 181. The sealing member 187a may electrically insulate the cooling terminal 187 from the cap plate 181. The sealing member 187a may be a seal gasket. In some embodiments, the upper coupling member 185 may seal a gap between the cooling terminal 187 and the cap plate 181.

The cooling terminal 187 may be coupled to a cooling terminal hole of the cap plate 181 downward from the upper side of the cap plate 181 and then be coupled by riveting. However, in the present disclosure, the method for coupling the cooling terminal 187 to the cap plate 181 may not be limited. The cooling terminal 187 may be an external input/output terminal and may transmit current applied from the outside to the cooling member 120.

The above-mentioned embodiment is merely an embodiment of the secondary battery, and thus, the present disclosure is not limited to the foregoing embodiments, and also it will be understood by those of ordinary skill in the art that various changes in form and details may be made therein without departing from the spirit and scope of the present disclosure as defined by the following claims.

## Claims

1. A secondary battery comprising:
an electrode assembly comprising a first electrode plate, a separator, and a second electrode plate;
a case configured to accommodate the electrode assembly;
a cap plate configured to seal the case;
a first terminal electrically connected to a first electrode plate of the electrode assembly and exposed to the outside the cap plate;
a cooling member accommodated inside the case and in contact with the electrode assembly; and
a cooling terminal electrically connected to the cooling member and exposed to the outside of the cap plate.

2. The secondary battery as claimed in 1, wherein the cooling member has a flat plate shape.

3. The secondary battery as claimed in 1, wherein the cooling member comprises an inner cooling member interposed between the first electrode plate and the separator or between the second electrode plate and the separator inside the electrode assembly.

4. The secondary battery as claimed in 3, wherein the cooling member further comprises an outer cooling member that is in contact with an outer surface of the electrode assembly.

5. The secondary battery as claimed in 4, wherein the outer cooling member comprises two outer cooling members, which are in contact with both long sides of the electrode assembly to cover both the long sides of the electrode assembly, respectively.

6. The secondary battery as claimed in 4, wherein the inner cooling member is interposed between the electrode assemblies at regular intervals.

7. The secondary battery as claimed in 4, wherein the cooling member is electrically connected to the cooling terminal through a conducting wire.

8. The secondary battery as claimed in 7, wherein each of the cooling member and the conducting wire is coated with an insulating material.

9. The secondary battery as claimed in 8, wherein the insulating material is configured to cover all the cooling member and the conducting wire.

10. The secondary battery as claimed in 8, wherein the insulating material comprises silica aerogel or polyimide foam.

11. The secondary battery as claimed in 1, wherein the cooling member is made of a thermoelectric element or thermoelectric material.

12. The secondary battery as claimed in 2, wherein the cooling member has a size less than that of the first electrode plate or the second electrode plate.

13. The secondary battery as claimed in 1, wherein the electrode assembly comprises a stack type electrode assembly in which the first electrode plate, the separator, the second electrode plate, and the separator are sequentially stacked.

14. The secondary battery as claimed in 1, further comprising a sealing member interposed between the cooling terminal and the cap plate.

15. The secondary battery as claimed in 1, wherein the cooling member comprises an outer cooling member that is in contact with an outer surface of the electrode assembly.
